# EUROPÄISCHE PATENTSCHRIFT

(11) **EP 1 755 929 B1**
(45) Veröffentlichungstag und Bekanntmachung des Hinweises auf die Patenterteilung: **13.05.2009**
(21) Anmeldenummer: 05759921.9
(22) Anmeldetag: 15.06.2005
(51) Int. Cl.: B60R 21/09, B60T 7/06

(54) **PEDALANORDNUNG FÜR EIN KRAFTFAHRZEUG**
PEDAL ARRANGEMENT FOR A MOTOR VEHICLE
ENSEMBLE PEDALE POUR VEHICULE A MOTEUR

(30) Priorität: 15.06.2004 DE 102004028555
(43) Veröffentlichungstag der Anmeldung: 28.02.2007
(73) Patentinhaber: ZF FRIEDRICHSHAFEN Aktiengesellschaft, 88038 Friedrichshafen (DE)
(72) Erfinder: BURGSTALER, Andree, 32351 Dielingen (DE); DÜTZ, Jan, 49401 Damme (DE); MEYER, Wolfgang, 49088 Osnabrück (DE); HÜLSMANN, Silke, 49434 Neuenkirchen/Vörden (DE)
(86) Internationale Anmeldenummer: PCT/DE2005/001061
(87) Internationale Veröffentlichungsnummer: WO 2005/123467

(56) Entgegenhaltungen:
- EP-A- 0 659 615
- EP-A- 0 827 874
- EP-A- 1 266 813
- DE-A1- 10 040 270

## Beschreibung

Die vorliegende Erfindung betrifft eine Pedalanordnung für ein Kraftfahrzeug, mit einem zwei Schenkel aufweisenden Lagerbock, einer sich zwischen den beiden Schenkeln erstreckenden Lagerachse, wenigstens einem an der Lagerachse gelagerten Pedal, zwei an den Schenkeln angeordneten Lagerelementen, die mit den beiden Enden der Lagerachse in Eingriff stehen und zwei Deformationsstreben, die sich von den beiden Lagerelementen aus von dem Lagerbock wegerstrecken.

Eine derartige Pedalanordnung ist aus dem Stand der Technik bekannt. Zum Beispiel offenbart die EP 0 659 615 A1 ein Pedalwerk für ein Kraftfahrzeug, wobei eine aus zwei Strebenschenkeln bestehende Pedalstrebe mit einem Ende an einem Querträger und mit einem anderen Ende an der vorderen Stirnwand des Kraftfahrzeugs befestigt ist. Zwischen den beiden Strebenschenkeln ist ein Pedal mittels einer Pedalachse gelagert, die im Bereich ihrer freien Enden jeweils von einem zur Pedalachse hin offenen Achslager schwenkbar aufgenommen ist. Die Achslager sind als aus den Strebenschenkeln ausgebogene Hülsen ausgebildet, deren Außendurchmesser geringer als der Innendurchmesser der Pedalachse ist. Bei einem Aufprallunfall bewirken die in die Pedalstrebe eingeleiteten hohen Kräfte, dass die beiden Strebenschenkel auseinandergebogen werden, so dass das Pedal aus der Pedalstrebe herausfällt.

Nachteilig an diesem Pedalwerk ist, dass nach einem Aufprallunfall die gesamte Pedalstrebe verformt und somit unbrauchbar ist. Ferner kann nicht sichergestellt werden, dass im Falle eines Unfalls die Pedalachse vollständig außer Eingriff mit beiden Hülsen gebracht wird, so dass die Gefahr besteht, dass die Pedalachse z.B. an einer der beiden Hülsen hängen bleibt.

Ausgehend von diesem Stand der Technik liegt der Erfindung die Aufgabe zugrunde, eine Pedalanordnung für ein Kraftfahrzeug zu schaffen, wobei im Falle eines Aufprallunfalls die Pedalanordnung lediglich geringfügig zerstört wird und die Lagerachse mit den Lagerelementen sicher außer Eingriff gebracht werden kann.

Diese Aufgabe wird mit einer Pedalanordnung für ein Kraftfahrzeug nach Anspruch 1 gelöst. Bevorzugte Weiterbildungen sind in den Unteransprüchen gegeben.

Die erfindungsgemäße Pedalanordnung für ein Kraftfahrzeug weist einen zwei Schenkel aufweisenden Lagerbock, eine sich zwischen den beiden Schenkeln erstreckende Lagerachse, wenigstens ein an der Lagerachse gelagertes Pedal, zwei an den Schenkeln angeordnete Lagerelemente, die mit den beiden Enden der Lagerachse in Eingriff stehen, und zwei Deformationsstreben auf, die sich von den beiden Lagerelementen aus von dem Lagerbock wegerstrecken. Dabei weisen die beiden Schenkel jeweils ein Lagerloch auf und erstrecken sich in den Raum zwischen den beiden Deformationsstreben hinein, an denen die Lagerelemente befestigt sind, welche die Lagerlöcher durchgreifen.

Bei der erfindungsgemäßen Pedalanordnung bewegt sich im Falle eines Aufprallunfalls der Lagerbock auf die Deformationsstreben zu, so dass diese auseinandergedrückt werden. Da die Deformationsstreben an den Lagerelementen befestigt sind, werden diese beim Auseinanderdrücken der Deformationsstreben aus den Lagerlöchern herausgezogen, bis die Lagerachse außer Eingriff mit den Lagerelementen steht. Somit ist die Lagerachse mit dem Pedal nicht mehr am Lagerbock gelagert und kann sich relativ zu diesem verschieben. Der Lagerbock, die Lagerachse, das Pedal und die Lagerelemente bleiben dabei regelmäßig unbeschädigt und können gegebenenfalls erneut verwendet werden. Dadurch, dass die Lagerelemente von dem Lagerbock separierte Bauelemente sind, können diese im Falle eines Aufprallunfalls relativ leicht aufgrund der Verformung der Deformationsstreben vollständig außer Eingriff mit der Lagerachse gebracht werden, so dass ein z.B. einseitiges "Hängenbleiben" der Lagerachse vermieden werden kann.

Die beiden Deformationsstreben sind nicht einstückig mit den beiden Schenkeln bzw. mit dem Lagerbock ausgebildet. Dies ermöglicht ein relativ ungehindertes Auseinanderbiegen der beiden Deformationsstreben im Falle eines Aufprallunfalls. Ferner können der Lagerbock und die Deformationsstreben aus unterschiedlichen Materialien bestehen, wobei es sich bewährt hat, für die beiden Deformationsstreben ein duktiles und für den Lagerbock ein sprödes Material zu verwenden.

Damit das Auseinanderdrücken der beiden Deformationsstreben im Falle eines Aufprallunfalls erleichtert wird, erstrecken sich diese bereichsweise aufeinander zu, wobei die beiden Deformationsstreben insbesondere spiegelbildlich zueinander ausgebildet sein können. Als Material für die beiden Deformationsstreben hat sich Blech als geeignet erwiesen, die z.B. aus Stahl- oder aus Aluminiumblech bestehen.

Der insbesondere aus Kunststoff hergestellte Lagerbock weist bevorzugt einen Sockel auf, der die beiden Schenkel miteinander verbindet. Ferner haben sich PAGF (Polyamid, glasfaserverstärkt) und/oder PPGF (Polypropylen, glasfaserverstärkt) als geeignete Werkstoffe für den Lagerbock erwiesen.

Der Durchmesser der Lagerlöcher ist bevorzugt geringer als der Außendurchmesser der Lagerachse. Somit kann die Lagerachse mit ihren beiden Stirnflächen im zusammengebauten Zustand der Pedalanordnung an den einander zugewandten Flächen der beiden Schenkel anliegen oder einen geringen Abstand zu diesen aufweisen. Ferner kann die Lagerachse an ihren beiden Enden jeweils eine Ausnehmung aufweisen, in welche die Lagerelemente gleitfähig eingreifen, wobei aus Gründen der Stabilität und der Gewichtsersparnis die Lagerachse insbesondere als Rohr ausgebildet ist.

Die in axialer Richtung gleitfähig in den Lagerlöchern gelagerten Lagerelemente können sich an den der Lagerachse abgewandten Seiten der beiden Schenkel aus den Lagerlöchern heraus erstrecken, so dass zum Ausbilden der Befestigung zwischen den Deformationsstreben und den Lagerelementen die Deformationsstreben in die Lagerelemente eingreifen können, wobei in axialer Hinsicht eine formschlüssige Verbindung gebildet wird. Dafür weisen die Lagerelemente an ihren der Lagerachse abgewandten Enden bevorzugt jeweils eine Ringnut auf, in welche die Ränder von in den Deformationsstreben ausgebildeten Schlitzen eingreifen, die bevorzugt in den den beiden Schenkeln zugewandten Enden der Deformationsstreben ausgebildet sind.

Zur zusätzlichen Fixierung der Deformationsstreben an den Schenkeln können die beiden Deformationsstreben jeweils ein Fixierungsloch aufweisen, wobei an den der Lagerachse abgewandten Seiten der beiden Schenkel jeweils ein Vorsprung vorgesehen ist, der in das jeweilige Fixierungsloch eingreift. Anstelle der Vorsprünge oder zusätzlich zu diesen können die Deformationsstreben aber auch über Schrauben an den Schenkeln befestigt sein, die insbesondere derart schwach ausgebildet sind, dass die Schrauben im Falle eines Aufprallunfalls abgeschert oder aus dem Lagerbock herausgezogen werden können. Da diesen Schrauben lediglich eine Fixierungsfunktion und kein sicherheitsrelevanter Aspekt zukommt, kann der Lagerbock trotz des Abscherens der Schrauben nach einem Unfall wiederverwendet werden.

Die erfindungsgemäße Pedalanordnung wird insbesondere in einem Kraftfahrzeug eingesetzt, welches ein erstes Kraftfahrzeugbauteil und ein zweites Kraftfahrzeugbauteil aufweist, das im Falle eines Aufprallunfalls des Fahrzeugs in Richtung auf das erste Kraftfahrzeugbauteil zu bewegt wird. Dabei können die beiden Deformationsstreben mit ihren den beiden Schenkeln angewandten Enden an dem ersten Kraftfahrzeugbauteil und der Lagerbock an dem zweiten Kraftfahrzeugbauteil befestigt sein.

Insbesondere ist das erste Kraftfahrzeugbauteil ein Fahrzeugquerträger, wobei das zweite Kraftfahrzeugbauteil von einer den Motorraum von dem Fahrgastraum trennenden Fahrzeugstirnwand gebildet sein kann. Der Fahrzeugquerträger ist zum Beispiel zwischen den beiden A-Säulen des Kraftfahrzeugs befestigt und bleibt in seiner Position bei einem Aufprallunfall nahezu unverändert. Im Gegensatz dazu wird bei einem Aufprallunfall die Fahrzeugstirnwand regelmäßig in den Fahrgastraum hinein, auf den Fahrer zu bewegt, so dass eine Relativbewegung von Fahrzeugquerträger und Fahrzeugstirnwand auftritt, die das Auseinanderdrücken der beiden Deformationsstreben hervorruft.

Dadurch, dass die Lagerelemente in axialer Richtung gleitfähig mit der Lagerachse in Eingriff stehen und gleitfähig die Lagerlöcher durchgreifen, sind nur relativ geringe Kräfte zur Freigabe der Lagerachse mit dem oder den Pedal(en) erforderlich.

Ferner ist die erfindungsgemäße Pedalanordnung mit geringem technischen sowie finanziellen Aufwand realisierbar und unanfällig gegenüber Bauteiltoleranzen. Auch können die Deformationsstreben zur Vormontage der erfindungsgemäßen Pedalanordnung am Fahrzeugquerträger genutzt werden, so dass die Pedalanordnung zusammen mit dem Cockpit ins Fahrzeug einschwenkbar ist.

Wegen der geringen Anzahl beweglicher Teile neigt die erfindungsgemäße Pedalanordnung nicht zum Klappern. Auch wird die Toleranzkette im Bereich der Kraftübertragung durch die erfindungsgemäße Pedalanordnung nicht beeinflusst.

Die erfindungsgemäße Pedalanordnung stellt im Falle eines Aufprallunfalls ein sicheres Öffnen der Verbindung zwischen Lagerachse und Lagerbock sicher, so dass ein "Mitschleppen" der Lagerachse nebst Pedalen durch ein lediglich einseitiges Öffnen der Verbindung zwischen Lagerachse und Lagerbock verhindert werden kann.

Ferner kann die von den Automobilherstellern gewünschte Anforderung, dass die Pedalfreigabe insbesondere des Bremspedals im Falle eines Fahrzeugcrashs nur in Verbindung mit einer hohen Intrusion der Pedalerie in den Fahrgastraum erfolgt, erfüllt werden. Auch ist die erfindungsgemäße Pedalanordnung als vollständiges Pedalmodul lieferbar.

Die Erfindung wird nachfolgend anhand bevorzugter Ausführungsformen unter Bezugnahme auf die Zeichnung beschrieben. In der Zeichnung zeigen:
- Fig. 1:: eine perspektivische Ansicht der erfindungsgemäßen Pedalanordnung gemäß einer ersten Ausführungsform im uneingebauten Zustand,
- Fig. 2:: eine Seitenansicht der Ausführungsform nach Fig. 1 ohne Pedale,
- Fig. 3:: eine Schnittansicht der Ausführungsform nach Fig. 1 ohne Pedale,
- Fig. 4:: eine vergrößerte Ansicht des aus Fig. 3 mit X gekennzeichneten Bereichs,
- Fig. 5:: eine perspektivische Teilansicht des dem Lagerbock zugewandten Bereichs einer Deformationsstrebe nach Fig. 1,
- Fig. 6:: eine schematische Teilansicht eines Kraftfahrzeugs, in dem die Pedalanordnung nach Fig. 1 eingebaut ist und
- Fig. 7:: eine teilweise Schnittansicht einer erfindungsgemäßen Pedalanordnung gemäß einer zweiten Ausführungsform.

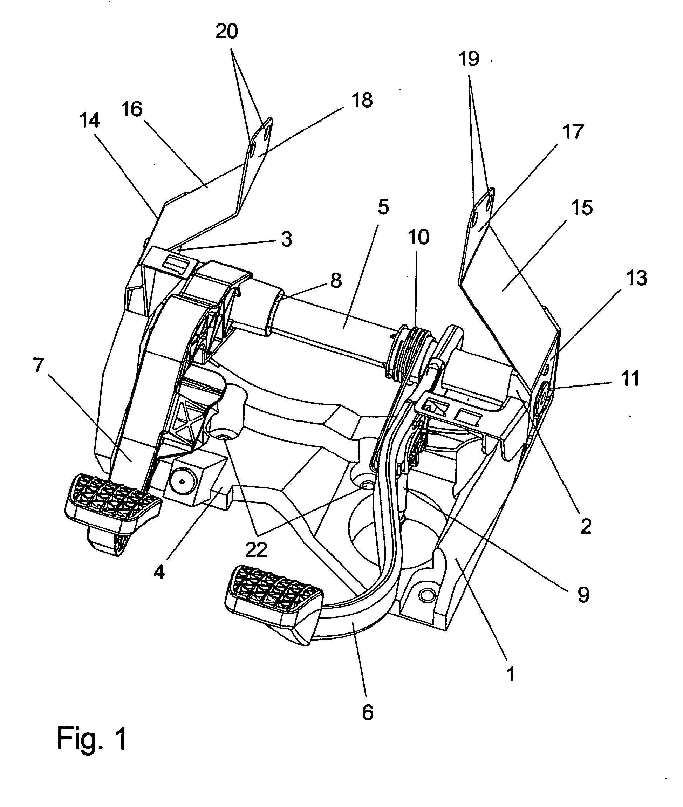

Aus Fig. 1 ist eine perspektivische Ansicht der erfindungsgemäßen Pedalanordnungen gemäß einer ersten Ausführungsform im nicht eingebauten Zustand ersichtlich, wobei ein aus Kunststoff hergestellter Lagerbock 1 zwei Schenkel 2 und 3 aufweist, die über einen Sockel 4 miteinander verbunden sind. Zwischen den beiden Schenkeln 2 und 3 ist eine Lagerachse 5 angeordnet, an der ein Bremspedal 6 und ein Kupplungspedal 7 montiert sind, wobei zwischen dem Kupplungspedal 7 und der Lagerachse 5 eine Lagerhülse 8 vorgesehen ist. Das Bremspedal 6 ist über eine Koppelstange 9 mit einem Bremskraftverstärker (nicht gezeigt) verbunden und kann von einer Feder 10 nach dem Betätigen in seine Ruheposition zurückgestellt werden.

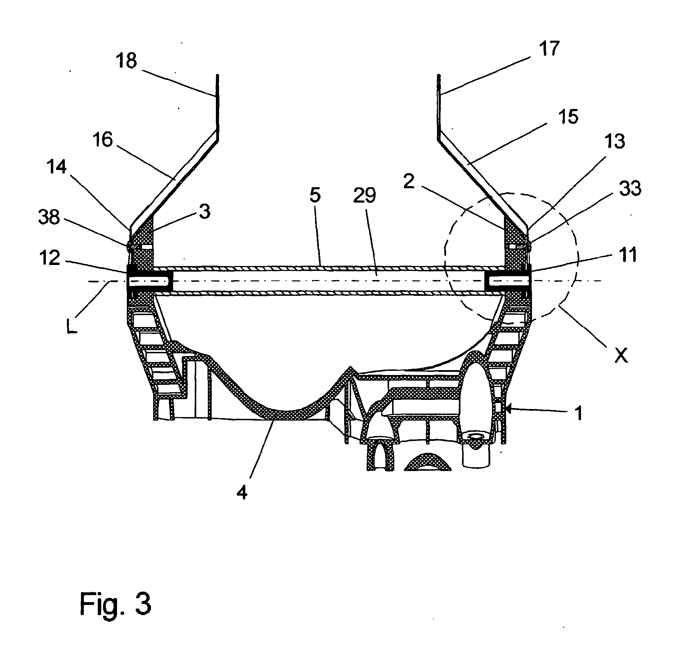

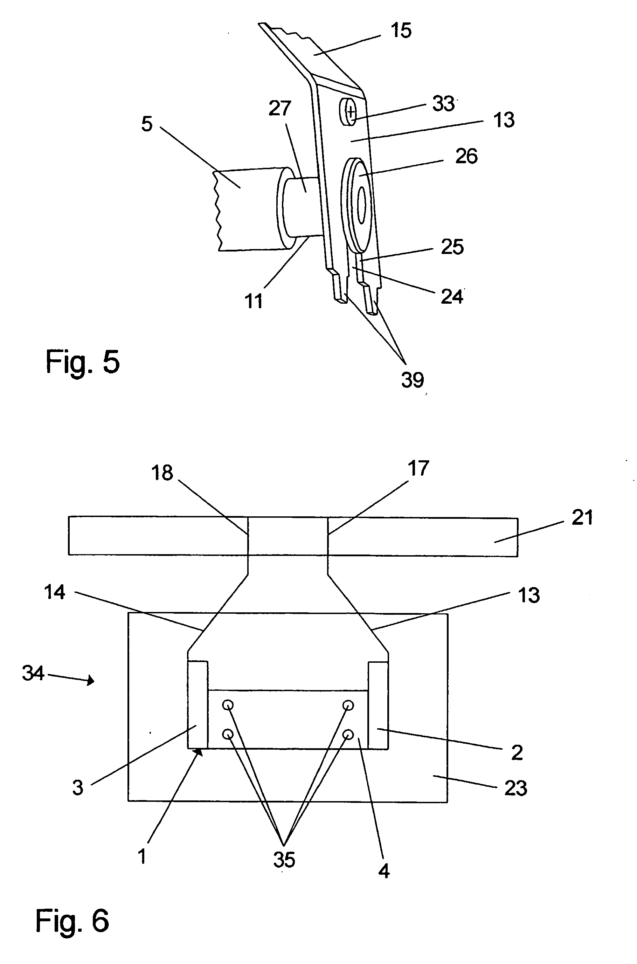

Die Lagerachse 5 ist über Lagerelemente 11 und 12 (siehe Figur 3) an den beiden Schenkeln 2 und 3 gelagert, welche zwischen zwei Deformationsstreben 13 und 14 angeordnet sind. Die Deformationsstreben 13 und 14 liegen an den der Lagerachse 5 abgewandten Seiten der beiden Schenkel 2 und 3 an und erstrecken sich von dem Sockel 4 weg in Richtung auf einen Fahrzeugquerträger 21 (siehe Figur 6). Ferner weisen die beiden Deformationsstreben 13 und 14 jeweils eine Schräge 15 und 16 auf, wobei der Abstand zwischen den beiden Schrägen 15 und 16 mit zunehmender Distanz zu den beiden Schenkeln 2 und 3 abnimmt. An den den beiden Schenkeln 2 und 3 abgewandten Enden der beiden Schrägen 15 und 16 schließt sich jeweils ein Befestigungsbereich 17 bzw. 18 an, der mit Löchern 19 und 20 zum Befestigen der Deformationsstreben 13 und 14 an dem Fahrzeugquerträger 21 versehen ist. Die beiden Befestigungsbereiche 17 und 18 verlaufen dabei im Wesentlichen parallel zueinander. Ferner sind in dem Sockel 4 mehrere Bohrungen 22 vorgesehen, so dass der Lagerbock 1 an einer Fahrzeugstirnwand 23 (siehe Figur 6) befestigt werden kann.

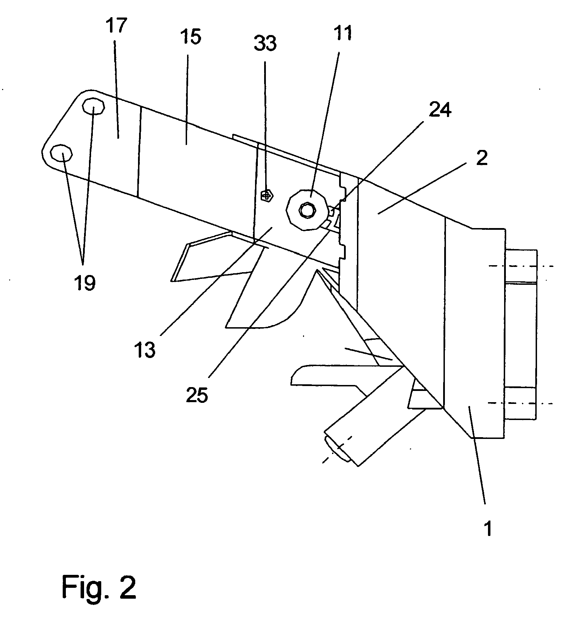

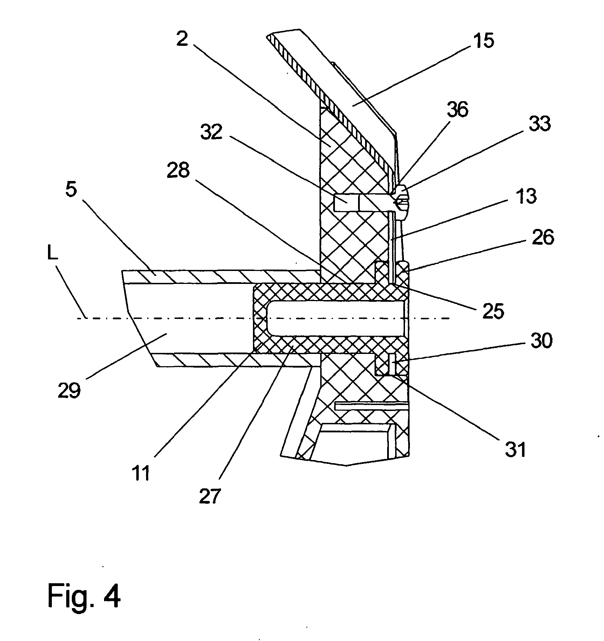

Figur 2 zeigt eine Seitenansicht der Ausführungsform nach Figur 1 ohne Pedale 6 und 7, wobei die Deformationsstrebe 13 an ihrem dem Schenkel 2 zugewandten Ende einen Schlitz 24 aufweist, dessen Ränder 25 in eine in dem Lagerelement 11 vorgesehene Ringnut 30 (siehe Fig. 4) eingreifen.

Aus Fig. 3 ist eine Schnittansicht der Ausführungsform nach Figur 1 ersichtlich, wobei das Kupplungspedal 7, die Lagerhülse 8, das Bremspedal 6, die Koppelstange 9 und die Feder 10 aus Gründen der Übersichtlichkeit weggelassen wurden. Es ist zu erkennen, dass die Lagerelemente 11 und 12 die Schenkel 2 und 3 durchgreifen und sich in den Innenraum 29 der als Rohr ausgebildeten Lagerachse 5 hineinerstrecken. Dabei sind die Lagerelemente 11 und 12 sowohl in den beiden Schenkeln 2 und 3 als auch im Innenraum 29 der Lagerachse 5 in Richtung von deren Längsachse L axial gleitfähig gelagert und an den beiden Deformationsstreben 13 und 14 befestigt.

Aus Figur 4 ist eine vergrößerte Ansicht des in Figur 3 mit X gekennzeichneten Bereichs ersichtlich. Das Lagerelement 11 weist einen Abschnitt 27 konstanten Durchmessers auf, der sich durch ein in dem Schenkel 2 vorgesehenes Lagerloch 28 hindurch bis in den Innenraum 29 der Lagerachse 5 hineinerstreckt. Das Lagerelement 11 ist mit dem Abschnitt 27 in Längsrichtung L gleitfähig in dem Lagerloch 28 und in dem Innenraum 29 gelagert sowie in axialer Hinsicht lediglich durch die Deformationsstrebe 13 fixiert, die mit den Rändern 25 des Schlitzes 24 in die in dem Kopfbereich 26 des Lagerelements 11 ausgebildete Ringnut 30 eingreift. Dabei weist der Kopfbereich 26 einen größeren Durchmesser als der Abschnitt 27 auf und sitzt in einer in dem Schenkel 2 vorgesehenen Ausnehmung 31.

Der Schenkel 2 weist eine zur Deformationsstrebe 13 hin offene Bohrung 32 auf, in welche eine ein in der Deformationsstrebe 13 vorgesehenes Loch 36 durchgreifende Schraube 33 eingeschraubt ist, deren Kopf einen größeren Durchmesser als das Loch 36 aufweist. Die lediglich zur Fixierung der Deformationsstrebe 13 dienende Schraube 33 ist derart schwach, dass sie im Falle eines Aufprallunfalls abgeschert oder aus dem Schenkel 2 herausgezogen werden kann, ohne dem Auseinanderdrücken der beiden Deformationsstreben 13 und 14 einen nennenswerten Widerstand entgegenzusetzen.

Zwar ist in Figur 4 lediglich die Befestigung von einem Ende der Lagerachse 5 an dem Schenkel 2 gezeigt, die Lagerachse 5 ist aber mit ihrem anderen Ende an dem Schenkel 3 über des Lagerelement 12 und die Deformationsstrebe 14 in entsprechender Weise befestigt. Ferner ist die Deformationsstrebe 14 über eine Schraube 38 an dem Schenkel 3 fixiert, die analog zur Schraube 33 derart schwach ist, dass sie im Falle eines Aufprallunfalls abgeschert oder aus dem Schenkel 3 herausgezogen werden kann, ohne dem Auseinanderdrücken der beiden Deformationsstreben 13 und 14 einen nennenswerten Widerstand entgegenzusetzen.

Aus Figur 5 ist eine perspektivische Teilansicht der Deformationsstrebe 13 mit teilweise dargestellter Lagerachse 5 ersichtlich, wobei der Lagerbock 1 weggelassen wurde. Die Deformationsstrebe 13 weist an ihrem dem Lagerbock 1 zugewandten Ende zwei Nasen 39 auf, die in in dem Lagerbock 1 ausgebildete Freimachungen (nicht gezeigt) eingreifen und als Fixierungshilfe dienen. Obwohl nicht gezeigt, ist auch die Deformationsstrebe 14 an ihrem dem Lagerbock 1 zugewandten Ende mit zwei Nasen versehen, die in Freimachungen des Lagerbocks 1 eingreifen.

Aus Figur 6 ist eine schematische Teilansicht eines Kraftfahrzeugs 34 ersichtlich, wobei die Pedalanordnung nach Fig. 1 im eingebauten Zustand gezeigt ist. Dabei ist aus Gründen der Übersichtlichkeit von der Pedalanordnung lediglich der Pedalbock 1 mit den beiden Schenkeln 2 und 3, dem Sockel 4 und den beiden Deformationsstreben 13 und 14 dargestellt. Wie aus Figur 6 ersichtlich, ist der Lagerbock 1 über die Bohrungen 22 durchgreifende Schrauben 35 an der Fahrzeugstirnwand 23 befestigt, wohingegen die beiden Deformationsstreben 13 und 14 mit ihren Befestigungsbereichen 17 und 18 an dem Fahrzeugquerträger 21 befestigt sind.

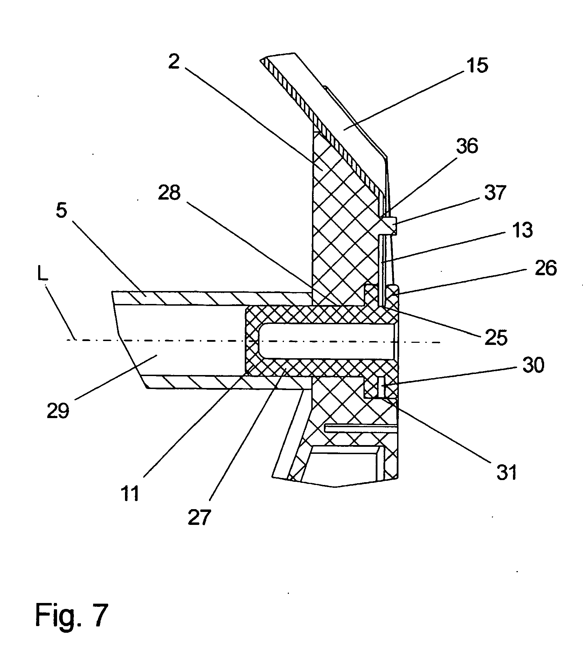

Aus Figur 7 ist eine teilweise Schnittansicht einer erfindungsgemäßen Pedalanordnung gemäß einer zweiten Ausführungsform ersichtlich, wobei identische oder ähnlich Merkmale mit denselben Bezugszeichen wie bei der ersten Ausführungsform bezeichnet sind. An der der Pedalachse 5 abgewandten Seite des Schenkels 2 ist ein Vorsprung 37 vorgesehen, der in das in der Deformationsstrebe 13 vorgesehene Loch 36 eingreift. Dieser Vorsprung 37 übernimmt die Fixierungsfunktion der Deformationsstrebe 13 an dem Schenkel 2, so dass die Bohrung 32 und die Schraube 33, die nach der ersten Ausführungsform vorgesehen sind, entfallen können. Dabei ist die Fixierung der Deformationsstrebe 14 an dem Schenkel 3 in entsprechender Weise ausgebildet. Bis auf diese beiden Fixierungen und gegebenenfalls die Nasen sind die beiden Ausführungsformen aber identisch ausgebildet.

### Bezugszeichenliste

- 1: Lagerbock
- 2: Schenkel des Lagerbocks
- 3: Schenkel des Lagerbocks
- 4: Sockel des Lagerbocks
- 5: Lagerachse
- 6: Bremspedal
- 7: Kupplungspedal
- 8: Lagerhülse für Kupplungspedal
- 9: Kuppelstange für Bremspedal
- 10: Feder für Bremspedal
- 11: Lagerelement für Lagerachse
- 12: Lagerelement für Lagerachse
- 13: Deformationsstrebe
- 14: Deformationsstrebe
- 15: Schräge
- 16: Schräge
- 17: Befestigungsbereich
- 18: Befestigungsbereich
- 19: Löcher in Befestigungsbereich
- 20: Löcher in Befestigungsbereich
- 21: Fahrzeugquerträger
- 22: Löcher in Sockel
- 23: Fahrzeugstirnwand
- 24: Schlitz in Deformationsstrebe
- 25: Ränder des Schlitzes
- 26: Kopfbereich des Lagerelements
- 27: Abschnitt des Lagerelements
- 28: Lagerloch in Schenkel
- 29: Innenraum der Lagerachse
- 30: Ringnut in Lagerelement
- 31: Ausnehmung im Schenkel
- 32: Bohrung in Schenkel
- 33: Fixierungsschraube
- 34: Kraftfahrzeug
- 35: Schrauben
- 36: Loch in Deformationsstrebe
- 37: Vorsprung an Schenkel
- 38: Fixierungsschraube
- 39: Nasen an Deformationsstrebe

## Patentansprüche

1. Pedalanordnung für ein Kraftfahrzeug, mit einem zwei Schenkel (2, 3) aufweisen Lagerbock (1), einer sich zwischen den beiden Schenkeln (2, 3) erstreckenden Lagerachse (5), wenigstens einem an der Lagerachse (5) gelagerten Pedal (6, 7), zwei an den Schenkeln (2, 3) angeordneten Lagerelementen (11, 12), die mit den beiden Enden der Lagerachse (5) in Eingriff stehen, zwei Deformationsstreben (13, 14), die sich von den beiden Lagerelementen (11, 12) aus von dem Lagerbock (1) wegerstrecken,
**dadurch gekennzeichnet, dass**
die beiden Schenkel (2, 3) jeweils ein Lagerloch (28) aufweisen und sich in den Raum zwischen den beiden Deformationsstreben (13, 14) hineinerstrecken, an denen die Lagerelemente (11, 12) befestigt sind, welche die Lagerlöcher (28) gleitfähig durchgreifen.

2. Pedalanordnung nach Anspruch 1,
**dadurch gekennzeichnet, dass**
die beiden Deformationsstreben (13, 14) nicht einstückig mit den beiden Schenkeln (2, 3) ausgebildet sind.

3. Pedalanordnung nach Anspruch 1 oder 2,
**dadurch gekennzeichnet, dass**
sich die beiden Deformationsstreben (13, 14) in einem Bereich (15, 16) aufeinander zu erstrecken.

4. Pedalanordnung nach einem der vorangehenden Ansprüche,
**dadurch gekennzeichnet, dass**
die beiden Deformationsstreben (13, 14) zueinander spiegelbildlich ausgebildet sind.

5. Pedalanordnung nach einem der vorangehenden Ansprüche,
**dadurch gekennzeichnet, dass**
die beiden Deformationsstreben (13, 14) aus Blech bestehen.

6. Pedalanordnung nach einem der vorangehenden Ansprüche,
**dadurch gekennzeichnet, dass**
der Lagerbock (1) einen Sockel (4) aufweist, von dem die beiden Schenkel (2, 3) miteinander verbunden sind.

7. Pedalanordnung nach einem der vorangehenden Ansprüche,
**dadurch gekennzeichnet, dass**
der Lagerbock (1) aus Kunststoff besteht.

8. Pedalanordnung nach einem der vorangehenden Ansprüche,
**dadurch gekennzeichnet, dass**
der Durchmesser der Lagerlöcher (28) geringer als der Außendurchmesser der Lagerachse (5) ist.

9. Pedalanordnung nach einem der vorangehenden Ansprüche,
**dadurch gekennzeichnet, dass**
die Lagerachse (5) an ihren beiden Enden jeweils eine Ausnehmung (29) aufweist, in welche die Lagerelemente (11, 12) eingreifen.

10. Pedalanordnung nach einem der vorangehenden Ansprüche,
**dadurch gekennzeichnet, dass**
die Lagerachse (5) als Rohr ausgebildet ist.

11. Pedalanordnung nach einem der vorangehenden Ansprüche,
**dadurch gekennzeichnet, dass**
sich die Lagerelemente (11, 12) an den der Lagerachse (5) abgewandten Seiten der beiden Schenkel (2, 3) aus den Lagerlöchern (28) heraus erstrecken.

12. Pedalanordnung nach einem der vorangehenden Ansprüche,
**dadurch gekennzeichnet, dass**
die Deformationsstreben (13, 14) in die Lagerelemente (11, 12) eingreifen.

13. Pedalanordnung nach einem der vorangehenden Ansprüche,
**dadurch gekennzeichnet, dass**
an den der Lagerachse (5) abgewandten Enden der Lagerelemente (11, 12) jeweils eine Ringnut (30) vorgesehen ist, in welche die jeweilige Deformationsstrebe (13, 14) eingreift.

14. Pedalanordnung nach Anspruch 13,
**dadurch gekennzeichnet, dass**
die Deformationsstreben (13, 14) in ihren den beiden Schenkeln (2, 3) zugewandten Enden jeweils einen Schlitz (24) aufweisen, dessen Ränder (25) in die jeweilige Ringnut (30) eingreifen.

15. Pedalanordnung nach einem der vorangehenden Ansprüche,
**dadurch gekennzeichnet, dass**
die beiden Deformationsstreben (13, 14) jeweils mit einer Schraube (33) an den Schenkeln (2, 3) fixiert sind.

16. Pedalanordnung nach einem der vorangehenden Ansprüche,
**dadurch gekennzeichnet, dass**
die beiden Schenkel (2, 3) an ihren einander abgewandten Seiten jeweils einen Vorsprung (37) aufweisen, der in ein in der jeweiligen Deformationsstrebe (13, 14) vorgesehenes Loch (36) eingreift.

17. Pedalanordnung nach einem der vorangehenden Ansprüche,
**dadurch gekennzeichnet, dass**
die beiden Deformationsstreben (13, 14) an ihren dem Lagerbock (1) zugewandten Enden jeweils wenigstens eine Nase (39) aufweisen, die in den Lagerbock (1) eingreift.

18. Kraftfahrzeug mit einer Pedalanordnung nach einem der vorangehenden Ansprüche, einem ersten Kraftfahrzeugbauteil (21) und einem zweiten Kraftfahrzeugbauteil (23), welches im Falle eines Aufprallunfalls des Fahrzeugs (34) in Richtung auf das erste Kraftfahrzeugbauteil (21) bewegt wird, wobei die beiden Deformationsstreben (13, 14) an dem ersten Kraftfahrzeugbauteil (21) und der Lagerbock (1) an dem zweiten Kraftfahrzeugbauteil (23) befestigt sind.

19. Kraftfahrzeug nach Anspruch 18,
**dadurch gekennzeichnet, dass**
das erste Kraftfahrzeugbauteil (21) ein Fahrzeugquerträger ist und das zweite Kraftfahrzeugbauteil (23) von einer Fahrzeugstirnwand gebildet ist.

## Claims

1. Pedal arrangement for a motor vehicle, which pedal arrangement has a bearing pedestal (1) having two sidepieces (2, 3), a bearing spindle (5) extending between said two sidepieces (2, 3), at least one pedal (6, 7) mounted on the bearing spindle (5), two bearing elements (11, 12) which are arranged on the sidepieces (2, 3) and are in engagement with the two ends of the bearing spindle (5), and two deformation struts (13, 14) which extend, from the two bearing elements (11, 12), away from the bearing pedestal (1),
**characterised in that**
the two sidepieces (2, 3) have a bearing hole (28) in each case and extend into the space between the two deformation struts (13, 14) to which the bearing elements (11, 12), which engage through the bearing holes (28) in a slidable manner, are fastened.

2. Pedal arrangement according to claim 1,
**characterised in that**
the two deformation struts (13, 14) are not constructed in one piece with the two sidepieces (2, 3).

3. Pedal arrangement according to claim 1 or 2,
**characterised in that**
the two deformation struts (13, 14) extend towards one another in one region (15, 16).

4. Pedal arrangement according to one of the preceding claims,
**characterised in that**
the two deformation struts (13, 14) are constructed in a mirror-inverted manner, relative to one another.

5. Pedal arrangement according to one of the preceding claims,
**characterised in that**
the two deformation struts (13, 14) consist of sheet metal.

6. Pedal arrangement according to one of the preceding claims,
**characterised in that**
the bearing pedestal (1) has a base (4) by which the two sidepieces (2, 3) are connected to one another.

7. Pedal arrangement according to one of the preceding claims,
**characterised in that**
the bearing pedestal (1) consists of plastic.

8. Pedal arrangement according to one of the preceding claims,
**characterised in that**
the diameter of the bearing holes (28) is smaller than the external diameter of the bearing spindle (5).

9. Pedal arrangement according to one of the preceding claims,
**characterised in that**
the bearing spindle (5) has, at each of its two ends, a recess (29) in which the bearing elements (11, 12) engage.

10. Pedal arrangement according to one of the preceding claims,
**characterised in that**
the bearing spindle (5) is constructed as a tube.

11. Pedal arrangement according to one of the preceding claims,
**characterised in that**
the bearing elements (11, 12) extend out of the bearing holes (28) on those sides of the two sidepieces (2, 3) which face away from the bearing spindle (5).

12. Pedal arrangement according to one of the preceding claims,
**characterised in that**
the deformation struts (13, 14) engage in the bearing elements (11, 12).

13. Pedal arrangement according to one of the preceding claims,
**characterised in that**
an annular groove (30) in which the respective deformation strut (13, 14) engages is constructed, in each case, at those ends of the bearing elements (11, 12) which face away from the bearing spindle (5).

14. Pedal arrangement according to claim 13,
**characterised in that**
the deformation struts (13, 14) have, in their ends that face towards the two sidepieces (2, 3), a slot (24), in each case, whose edges (25) engage in the respective annular groove (30).

15. Pedal arrangement according to one of the preceding claims,
**characterised in that**
the two deformation struts (13, 14) are fixed to the sidepieces (2, 3) by means of a screw (33) in each case.

16. Pedal arrangement according to one of the preceding claims,
**characterised in that**
the two sidepieces (2, 3) have, on their sides that face away from each other, a projection (37), in each case, which engages in a hole (36) provided in the respective deformation strut (13, 14).

17. Pedal arrangement according to one of the preceding claims,
**characterised in that**
the two deformation struts (13, 14) have, at their ends that face towards the bearing pedestal (1), at least one nose (39), in each case, which engages in the bearing pedestal (1).

18. Motor vehicle having a pedal arrangement according to one of the preceding claims, a first motor vehicle component (21) and a second motor vehicle component (23) which is moved towards the first motor vehicle component (21) in the event of an accident involving a collision of the vehicle (34), wherein the two deformation struts (13, 14) are fastened to the first motor vehicle component (21) and the bearing pedestal (1) is fastened to the second motor vehicle component (23).

19. Motor vehicle according to claim 18,
**characterised in that** the first motor vehicle component (21) is a cross-member of the vehicle and the second motor vehicle component (23) is constituted by a front bulkhead of the vehicle.

## Revendications

1. Ensemble de pédale pour véhicule à moteur, comprenant un support de palier (1) qui présente deux branches (2, 3), un axe de palier (5) qui s'étend entre les deux branches (2, 3), au moins une pédale (6, 7) montée sur l'axe de palier (5), deux éléments de palier (11, 12) agencés sur les branches (2, 3) et qui sont en prise avec les deux extrémités de l'axe de palier (5), deux montants de déformation (13, 14), qui s'éloignent du support de palier (1) par les deux éléments de palier (11, 12), **caractérisé en ce que** les deux branches (2, 3) présentent respectivement un trou de palier (28) et s'étendent dans l'espace compris entre les deux montants de déformation (13, 14), auxquels sont fixés les éléments de palier (11, 12) qui traversent les trous de palier (28) de manière à pouvoir glisser.

2. Ensemble de pédale selon la revendication 1, **caractérisé en ce que** les deux montants de déformation (13, 14) ne sont pas formés d'un seul tenant avec les deux branches (2, 3).

3. Ensemble de pédale selon la revendication 1 ou 2, **caractérisé en ce que** les deux montants de déformation (13, 14) s'étendent l'un vers l'autre dans une zone (15, 16).

4. Ensemble de pédale selon l'une quelconque des revendications précédentes, **caractérisé en ce que** les deux montants de déformation (13, 14) sont agencés en symétrie l'un par rapport à l'autre.

5. Ensemble de pédale selon l'une quelconque des revendications précédentes, **caractérisé en ce que** les deux montants de déformation (13, 14) sont constitués de tôle.

6. Ensemble de pédale selon l'une quelconque des revendications précédentes, **caractérisé en ce que** le support de palier (1) présente un socle (4) par lequel les deux branches (2,3) sont raccordées l'une à l'autre.

7. Ensemble de pédale selon l'une quelconque des revendications précédentes, **caractérisé en ce que** le support de palier (1) est constitué d'un matériau synthétique.

8. Ensemble de pédale selon l'une quelconque des revendications précédentes, **caractérisé en ce que** le diamètre des trous de palier (28) est inférieur au diamètre externe de l'axe de palier (5).

9. Ensemble de pédale selon l'une quelconque des revendications précédentes, **caractérisé en ce que** l'axe de palier (5) présente à ses deux extrémités, respectivement, un évidement (29) dans lequel les éléments de palier (11, 12) s'engagent.

10. Ensemble de pédale selon l'une quelconque des revendications précédentes, **caractérisé en ce que** l'axe de palier (5) se présente sous forme de tube.

11. Ensemble de pédale selon l'une quelconque des revendications précédentes, **caractérisé en ce que** les éléments de palier (11, 12) s'étendent hors des trous de palier (28) sur les côtés des deux branches (2, 3) opposés à l'axe de palier (5).

12. Ensemble de pédale selon l'une quelconque des revendications précédentes, **caractérisé en ce que** les montants de déformation (13, 14) s'engagent dans les éléments de palier (11, 12).

13. Ensemble de pédale selon l'une quelconque des revendications précédentes, **caractérisé en ce que** les extrémités des éléments de palier (11, 12) opposées à l'axe de palier (5) présentent respectivement une rainure annulaire (30), dans laquelle le montant de déformation respectif (13, 14) s'engage.

14. Ensemble de pédale selon la revendication 13, **caractérisé en ce que** les montants de déformation (13, 14) présentent à leurs extrémités tournées vers les deux branches (2, 3) respectivement une fente (24), dont les bords (25) s'engagent dans la rainure annulaire respective (30).

15. Ensemble de pédale selon l'une quelconque des revendications précédentes, **caractérisé en ce que** les deux montants de déformation (13, 14) sont respectivement fixés sur les branches (2, 3) à l'aide d'une vis (33).

16. Ensemble de pédale selon l'une quelconque des revendications précédentes, **caractérisé en ce que** les deux branches (2, 3) présentent sur leurs côtés opposés l'un à l'autre respectivement une saillie (37), qui s'engage dans un trou (36) ménagé dans le montant de déformation respectif (13, 14).

17. Ensemble de pédale selon l'une quelconque des revendications précédentes, **caractérisé en ce que** les deux montants de déformation (13, 14) présentent à leurs extrémités tournées vers le support de palier (1) respectivement au moins un taquet (39) qui s'engage dans le support de palier (1).

18. Véhicule automobile pourvu d'un ensemble de pédale selon l'une quelconque des revendications précédentes, une première pièce de véhicule (21) et une seconde pièce de véhicule (23), qui est déplacée dans le cas d'un impact du véhicule (34) dans la direction de la première pièce de véhicule (21), dans lequel les deux montants de déformation (13,14) sont fixés à la première pièce de véhicule (21) et le support de palier (1) est fixé à la deuxième pièce de véhicule (23).

19. Véhicule automobile selon la revendication 18, **caractérisé en ce que** la première pièce de véhicule (21) est une traverse du véhicule et la deuxième pièce de véhicule (23) est formée d'une paroi frontale du véhicule.
